Europäisches Patentamt

(19) European Patent Office    (11) Publication number:    **0 073 126**

Office européen des brevets    **B1**

(12) **EUROPEAN PATENT SPECIFICATION**

(45) Date of publication of patent specification: **31.07.85**    (51) Int. Cl.⁴: **B 65 C 9/36, B 65 G 47/26**

(21) Application number: **82304295.7**

(22) Date of filing: **13.08.82**

(54) Label applicator.

(30) Priority: **17.08.81 US 293479**

(43) Date of publication of application:
**02.03.83 Bulletin 83/09**

(45) Publication of the grant of the patent:
**31.07.85 Bulletin 85/31**

(84) Designated Contracting States:
**DE FR GB**

(56) References cited:
**US-A-4 096 953**
**US-A-4 210 484**

(73) Proprietor: **LABEL-AIRE INC.**
**3801, Artesia Boulevard**
**Fullerton California 92633 (US)**

(72) Inventor: **Crankshaw, Michael**
**10119 Grindley Road**
**Santa Fe Springs California 90670 (US)**
Inventor: **Maday, Robert Paul**
**415 Sienaga Drive**
**Fullerton California 92635 (US)**

(74) Representative: **Smith, Philip Antony et al**
**REDDIE & GROSE 16 Theobalds Road**
**London WC1X 8PL (GB)**

Courier Press, Leamington Spa, England.

## Description

There are instances in which it is desirable to label articles which are arranged in side-by-side relationship on a conveyor or in which it is desirable to apply two labels at spaced locations to the same article. For example, some packaging equipment provides an output which includes side-by-side packages.

Crankshaw et al. U.S. Patent No. 4,210,484 discloses one way of labeling multiple side-by-side articles utilizing a single label applicator. This is accomplished by using labels which are provided in a plurality of contiguous rows extending longitudinally on a backing strip or web. The Crankshaw et al. label applicator removes the side-by-side labels from the web at a label receiving station, separates the labels, transports the labels to the label applying station, and transfers the labels to the articles. This is accomplished by dispensing the labels onto movable label receivers and separating the label receivers as they move to the label applying station.

## Summary of the Invention

This invention is an improvement on the label applicator disclosed in the Crankshaw et al. patent. As explained more fully hereinbelow, this invention provides a simple, reliable and efficient way of spreading label receivers, and therefore, spreading the labels carried by such label receivers. Although the invention is described with particular reference to the spreading of label receivers, more broadly, the invention relates to imparting controlled movement in a novel way to one or more label receivers to thereby control the position of the label receiver, and this may be used for label spreading or other purposes.

According to the invention, a label applicator comprising a carriage reciprocable along a first path between a label dispensing station and a label applying station, and two label receivers mounted on the carriage of which at least a first label receiver is movable along a second path to separate the label receivers as they carry labels from the dispensing station to the applying station is characterized by an elongated flexible member coupled between the first label receiver and a fixed support and a guide for the flexible member movable with the carriage such that the first label receiver is moved along the second path by the flexible member as the carriage moves away from the fixed support.

A feature of this invention is the use of flexible means drivingly coupled to the label receiver and responsive to movement of the carriage in at least one direction along the first path for moving the label receiver in a first direction along the second path whereby the label receiver is moved to at least one of the stations. The flexible means can be used to move the label receiver to either or both of the label applying and label dispensing stations; however, it is preferred to use the flexible means to move the label receiver to the label applying position and to use other means, such as a return spring, to move the label receiver back to the label receiving station.

More specifically, the carriage can advantageously be reciprocated along the first path by a suitable motor, such as an air cylinder. The flexible means is preferably drivingly coupled to the label receiver and retained against bodily movement, i.e., movement of the entire flexible means, during at least a portion of the time the label receiver is moved toward the label applying station. As the carriage moves away from the retained region of the flexible means, the flexible means pulls the label receiver along the second path on the carriage. This can be advantageously implemented by a roller rotatably mounted at one end of the carriage over which the flexible means extends thereby permitting the flexible means to pull or drive the label receiver along the second path.

To positively locate the position of the label receiver along the second path, and therefore, assist in accurately locating the label receiver at the label applying station, a stop is provided, and the stop is preferably mounted on the carriage. The stop is adjustable to permit the label applicator to be adapted for different labeling requirements. To prevent the stop from breaking or excessively stressing the flexible means or other portions of the label applicator, the flexible means preferably includes extendible means responsive to the movement of the label applicator along the second path being arrested by the stop and additional movement of the carriage along its path for extending to thereby permit such additional movement of the carriage to occur.

The label applicator also includes adjustable means for varying the effective length of the flexible means to permit the label applicator to be adapted for different labeling requirements. Although the adjustable means may take different forms, in a preferred construction, it includes a mechanism for controlling the position of the end of the flexible means remote from the label receiver.

The concepts described above are applicable to the movement of one or more label receivers. In the preferred embodiment, the label applicator of this invention is used for label spreading purposes and, thus, includes at least two of the label receivers. All of the label receivers are preferably mounted on the carriage for movement with the carriage. However, not all of the label applicators need to be movable along the second path on the carriage so long as the necessary relative movement is accomplished. For example, if two label receivers are used, the labels can be spread by moving only one of the label receivers along the carriage, although it may be desirable for other reasons to move both of the label receivers.

The invention, together with additional features and advantages thereof, may best be understood by reference to the following description taken in connection with the accompanying illustrative drawing.

Brief Description of the Drawing

Fig. 1 is a rear elevational view of a portion of a label applicator constructed in accordance with the teachings of this invention. The label receivers are shown in full lines at the label dispensing station and in phantom lines at the label applying station.

Fig. 2 is a fragmentary sectional view taken generally along line 2—2 of Fig. 1 with portions of the label receiver being shown in cross section.

Fig. 3 is a fragmentary side elevational view taken generally along line 3—3 of Fig. 1.

Fig. 4 is a fragmentary plan view illustrating a label strip of the type which is adapted for use with the label applicator of this invention.

Description of the Preferred Embodiment

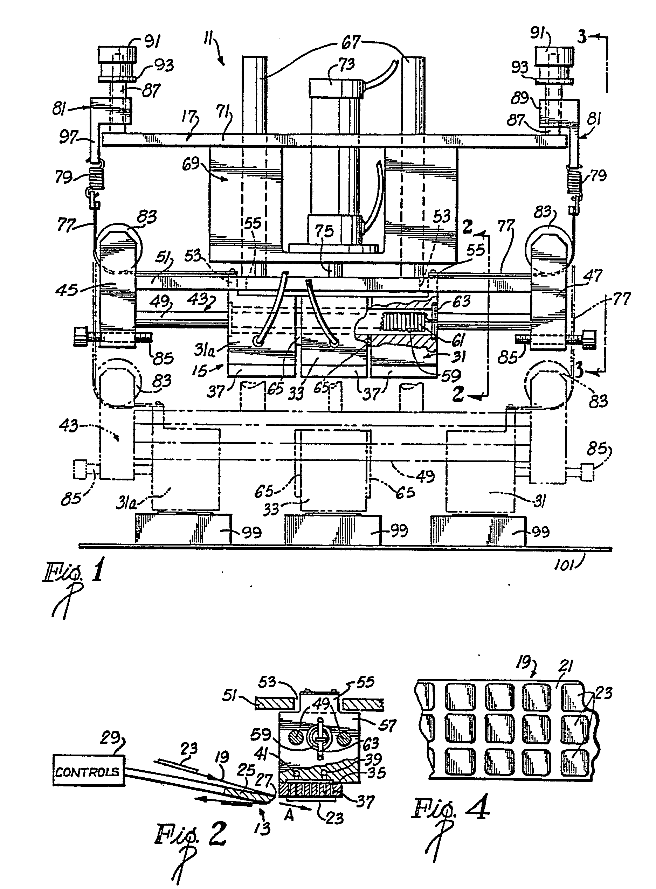

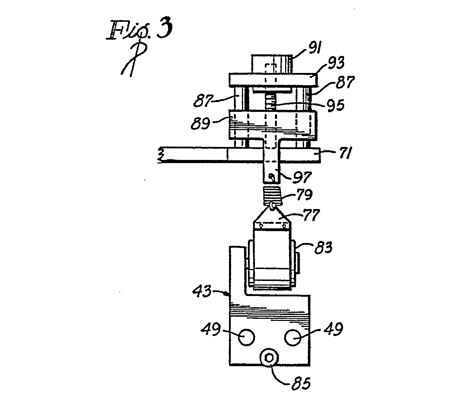

Figs. 1—3 show a label applicator 11 which generally includes label dispensing means 13 (Fig. 2), label separating means 15, and a supporting structure 17 on which the various components of the label applicator are mounted. The label applicator 11 is particularly adapted for use with a label strip 19 (Fig. 4) which includes a web or backing strip 21 of a suitable release paper and pressure sensitive adhesive labels 23 releasably adhered to one side of the backing strip. The backing strip 21 is elongated, and the labels 23 are provided in multiple, parallel rows which extend longitudinally of the backing strip. The rows of labels 23 may be contiguous or very narrowly spaced so that the width of the backing strip 21 is just sufficient to accommodate the side-by-side rows of the labels 23. In the form shown in Fig. 4, three rows of the labels 23 are provided. Of course, any suitable desired number of rows of labels 23 may be provided on the backing strip 21.

The label dispensing means 13 may be of any suitable construction which will remove the labels 23 from the backing strip 21 and provide them to the label separating means 15. Label dispensing means of this type is known and one such label dispensing means is disclosed in common assignee's U.S. Patent 4,046,613.

The label dispensing means 13 includes a peeler bar 25 suitably mounted on the supporting structure 17. The peeler bar 25 has a peeling edge 27 over which the label strip 19 extends. The label dispensing means 13 includes conventional controls 29 which sequentially move the label strip 19 in a well-known manner over the peeling edge 27 to sequentially remove the labels 23. With each indexing movement of the label strip 19, one label 23 from each of the three rows of labels shown in Fig. 4 is removed from the backing strip 21 in a direction transverse to the peeling edge 27 and in the direction of the arrow A in Fig. 2.

The label separating means 15 includes two identical, movable label receivers 31 and 31a and an intermediate label receiver 33 which is substantially identical to the movable label receivers. The label receivers 31, 31a and 33 receive the removed labels from the three rows of labels, respectively. The use of three label receivers is purely illustrative. Generally, the number of label receivers should correspond with the number of labels or groups of labels that are to be spread apart. Because the label receivers are substantially identical, only the label receiver 31 is described in detail, and corresponding portions of the label receivers 31a and 33 are designated by corresponding reference numerals.

The label receiver 31 is much like the conventional vacuum box used in prior art label applicators in that it includes a cavity 35 (Fig. 2) and an air pervious, apertured grid 37 for receiving one of the labels 23. The grid 37 lies closely adjacent the peeling edge 27 of the peeler bar 25 and at a small angle to the plane of movement of the labels 23 off of the backing strip 21 so that it can receive one of the labels 23 as such label is removed from the backing strip 21 by the label dispensing means. The cavity 35 is evacuated to a suitable subatmospheric pressure via a vacuum passage 39 to releasably retain the removed label 23 against the outer face of the grid 37 in a conventional manner, and an air blast can be provided through an air pressure passage 41 to remove the labels from the grid and transfer them to articles.

In the position shown in full lines in Fig. 1, the label receivers 31, 31a and 33 are in abutting relationship at a label dispensing station, i.e., the station at which the label receivers are positioned to receive labels from the label dispensing means 13. The label receiver 33 is sandwiched between the other two label receivers. The label receivers 31 and 31a are mounted for movement to spread the labels 23 generally in the direction of the width dimension of the backing strip 21 at the label dispensing station, i.e., generally in the direction in which the peeling edge 27 extends. Viewed from another perspective, the label receivers 31 and 31a spread the labels 23 in a direction generally transverse to the direction in which the labels move when they are peeled from the backing strip 21. In addition, the label receivers 31, 31a and 33 also move the labels 23 perpendicular to the peeling edge 27, i.e., downwardly as viewed in Fig. 1. This latter movement does not spread the labels but moves them into position for application to articles.

To provide for spreading of the labels 23, the label receivers 31 and 31a are mounted on a carriage 43 for relative movement toward and away from the intermediate label receiver 33 which, in the embodiment illustrated, is fixedly mounted on the carriage. Although the carriage 43 could be of different constructions, in the embodiment illustrated, it includes a pair of end plates 45 and 47, a pair of parallel guide rods 49 fixed to, and extending between, the end plates 45 and 47, and a plate 51 attached at its opposite ends to the end plates 45 and 47. In the embodiment shown in Fig. 1, the plate 51 is above the rods 49, and the plate and rods are horizontal. The plate 51 has two slots 53 extending from a central region of the plate 51 outwardly toward the end plates 45 and 47, respectively, to accommodate an upwardly extending flange 55 on each of the label receivers 31 and 31a.

As shown in Figs. 1 and 2, each of the label receivers includes a body 57, and the guide rods 49 extend through parallel bores in the body 57 to slidably mount the label receivers 31 and 31a and to fixedly mount the label receiver 33 on the guide rods. If desired, the label receivers 31 and 31a may carry bearings, not shown, for mounting these label receivers on the guide rods 49. The three label receivers have aligned spring bores 59 for accommodating a coil spring 61. The spring 61 is retained in the spring bores 59 by pins 63 which engage shoulders formed by counterbores at the outer ends of the spring bores 59 in the label receivers 31 and 31a. Thus, the spring 61 biases the label receivers 31 and 31a inwardly along the guide rods 49 toward the intermediate label receiver 33.

The central label receiver 33 has resilient pads 65 affixed to the opposite sides thereof for engagement with the movable label receivers 31 and 31a, respectively, to cushion the impact when the spring 61 moves the outer label receivers 31 and 31a against the intermediate label receiver 33.

To mount the carriage 43 for movement along a carriage path, which is vertical as shown in Fig. 1, the carriage includes rods 67 mounted on the plate 51 and projecting upwardly therefrom. The rods 67 are mounted for vertical movement by a bearing assembly 69 which is carried by a mounting plate 71 of the supporting structure 17. The mounting plate 71 is in turn suitably affixed to other supporting structure (not shown) of the label applicator 11. The carriage 43 is moved in the bearing assembly 69 by any suitable motor, such as a pneumatic actuator 73 mounted on the bearing assembly 69 and drivingly coupled to the plate 51 by a connecting rod 75.

With this invention, the label receivers 31 and 31a are moved outwardly automatically in response to movement of the carriage 43 along the carriage path. This is conveniently accomplished by flexible means for each of the label receivers 31 and 31a. In the embodiment illustrated, the flexible means includes an elongated flexible strap 77 coupled to the flange 55 of the label receiver 31 and extendible means in the form of a spring 79. The spring 79 is coupled to the mounting plate 71 by an adjusting assembly 81. To enable the strap 77 to extend in the correct direction, it extends part way around a roller 83 which is rotatably mounted on the end plate 47. This structure is duplicated for the label receiver 31a, and corresponding parts are designated by corresponding reference numerals.

With this construction, the outer ends of the straps 77 are fixed to the supporting structure 17, except to the extent that the springs 79 are caused to extend. Accordingly, as the carriage 43 moves downwardly, the outer label receivers 31 are pulled outwardly by the associated strap 77, with the position of the outer label receivers being a function of the position of the carriage 43 along the carriage path.

Adjustable stops 85 are carried by the end plates 45 and 47, respectively, to limit the travel of the outer label receivers 31 outwardly along the rods 49. Although the stops can take different forms, in the embodiment illustrated, each of them includes an adjusting screw threadedly received within the associated end plate 45 and 47.

Each of the adjusting assemblies 81 (Figs. 1 and 3) can lengthen or shorten the effective length of the associated strap 77 by moving the spring 79 up or down as viewed in Fig. 1. In the embodiment illustrated, each of the adjusting assemblies 81 includes a pair of vertical shafts 87 affixed to, and extending upwardly from, the mounting plate 71 and a carrier 89 mounted for sliding vertical movement on the shafts. An adjusting knob 91 is mounted for rotation, but not translation, on a plate 93 which is affixed to the upper ends of the shafts 87. The knob 91 carries a threaded stem 95 which is threadedly received within the carrier 89. The carrier 89 has a projecting tab 97 which is coupled to the spring 79. Accordingly, by manually rotating the knob 91, the carrier 89 can be moved up or down to increase or decrease the effective length of the strap 77. The adjusting assembly 81 for the label receiver 31a is identical, and corresponding portions are designated by corresponding reference numerals.

The label applicator 11 is adapted to apply three labels to one or more articles, with the labels being spaced apart a predetermined distance. For illustrative purposes, the label applicator 11 is shown in Fig. 1 as applying labels to three spaced articles 99 which are conveyed past the label applicator by a conveyor 101, with the articles 99 being moved into the plane on which Fig. 1 is taken or from left to right on the plane of Fig. 2.

In use, labels 23 are releasably retained on the grids 37 at the label dispensing station. The presence of the articles 99 at or near the labeling station is sensed by a photocell or other conventional means, and a suitable signal is provided to automatically extend the actuator 73 to move the carriage 43 vertically downwardly along the carriage path. Because the straps 77 are of fixed length and are held against bodily movement, they retain the outer label receivers 31 and 31a thereby pulling them outwardly toward the end plates 47 and 45, respectively. When the carriage 43 is at or closely approaching its lowermost position, the outer label receivers 31 and 31a contact their associated stops 85 and, thereafter, further movement of the outer label receivers away from each other is prevented. The springs 79 extend as needed to permit overtravel of the carriage 43 downwardly beyond the point where the outer label receivers 31 and 31a strike their respective stops 85.

When the carriage 43 is at, or substantially at, its downwardmost location, the articles 99 are at the labeling station directly beneath the label receivers 31, 31a and 33, respectively, and the labels are then automatically transferred to the associated article in a conventional manner, such as by a blast of air under pressure supplied through the passage 41, the cavity 35 and the openings of the grids 37. Alternatively, the labels 23 can be tamped on, or otherwise transferred to, the articles 99, respectively. Following the blast of air, the actuator 73 is automatically retracted to return the carriage 43 upwardly along the carriage path. During the upward travel of the carriage 43, the spring 61 moves the outer label receivers 31 and 31a inwardly as permitted by the straps 77 and as a function of the vertical position of the carriage. The pads 65 cushion any shock loading resulting from the spring 61 urging the outer label receivers 31 and 31a against the intermediate label receiver 33.

Following this, the controls 29 automatically advance the label strip 19 sufficiently to remove one of the labels 23 from each of the three rows of labels and apply such removed labels to the grids 37 of the label receivers 31, 31a and 33. Of course, the functions of the label applicator 11 could be programmed in other ways.

Although an exemplary embodiment of the invention has been shown and described, many changes, modifications and substitutions may be made by one having ordinary skill in the art without necessarily departing from the spirit and scope of this invention.

## Claims

1. A label applicator comprising a carriage (43) reciprocable along a first path (67) between a label dispensing station and a label applying station, and two label receivers (31, 31a) mounted on the carriage of which at least a first label receiver (31) is movable along a second path (49) to separate the label receivers as they carry labels from the dispensing station to the applying station characterized by an elongated flexible member (77) coupled between the first label receiver (31) and a fixed support (71) and a guide (83) for the flexible member movable with the carriage such that the first label receiver is moved along the second path by the flexible member as the carriage moves away from the fixed support.

2. A label applicator as claimed in claim 1 characterized in that the second label receiver (31a) ia also coupled to a fixed support (71) by an elongated flexible element (77) extending around a guide (83) such that the second label receiver is moved along the second path in the opposite direction to the first label receiver (31).

3. A label applicator as claimed in claim 2 characterized by a third label receiver (33) fixed on the carriage between the first and second label receivers.

4. A label applicator as claimed in any of the preceding claims characterized by a return spring (61) for returning said first label receiver along the second path as the carriage is moved back towards the fixed support.

5. A label applicator as claimed in claim 2 or 3 characterized by a return spring (61) coupling said first and second label receivers which is tensioned as they are moved apart.

6. A label applicator as claimed in any of the preceding claims characterized in that the guide is a roller (83) rotatably mounted on the carriage (43).

7. A label applicator as claimed in any of the preceding claims characterized by a stop (85) limiting the movement of the or each label receiver (31, 31a) along the second path and extendible means (79) connecting the flexible member (77) to the support (71) to permit movement of the carriage along the first path after engagement of the label receiver(s) with the stop(s).

8. A label applicator as claimed in any of the preceding claims characterized by adjusting means (81) for adjusting the effective length of the or each flexible element (77).

## Revendications

1. Applicateur d'étiquettes comprenant un chariot (43) ayant un mouvement alternatif le long d'un premier trajet (67) entre une station de distribution d'étiquettes et une station d'application d'étiquettes, et deux récepteurs d'étiquette (31, 31a) montés sur le chariot dont au moins un premier récepteur d'étiquette (31) est mobile le long d'un second trajet (49) pour séparer les récepteurs d'étiquette tandis qu'ils transportent les étiquettes de la station de distribution à la station d'application caractérisé par un organe flexible et allongé (77) couplé entre le premier récepteur d'étiquette (31) et un support fixe (71) et un guidage (83) pour l'organe flexible mobile avec le chariot de façon que le premier récepteur d'étiquette soit déplacé le long du second trajet par l'organe flexible tandis que le chariot se déplace au loin du support fixe.

2. Applicateur d'étiquettes selon la revendication 1 caractérisé en ce que le second récepteur d'étiquette (31a) est également couplé à un support fixe (71) par un élément flexible et allongé (77) s'étendant autour d'un guidage (83) de façon que le second récepteur d'étiquette soit déplacé le long du second trajet en direction opposée au premier récepteur d'étiquette (31).

3. Applicateur d'étiquettes selon la revendication 2 caractérisé par un troisième récepteur d'étiquette (33) fixé sur le chariot entre les premier et second récepteurs d'étiquette.

4. Applicateur d'étiquettes selon l'une quelconque des revendications précédentes caractérisé par un ressort de retour (61) pour ramener ledit premier récepteur d'étiquette le long du second trajet tandis que le chariot est déplacé vers le support fixe.

5. Applicateur d'étiquettes selon la revendication 2 ou 3 caractérisé par un ressort de retour (61) couplant les premier et second récepteurs d'étiquette qui est mis sous tension tandis qu'ils sont séparés.

6. Applicateur d'étiquettes selon l'une quelconque des revendications précédentes caractérisé en ce que le guidage est un rouleau (83) monté rotatif sur le chariot (43).

7. Applicateur d'étiquettes selon l'une quelconque des revendications précédentes caractérisé par une butée (85) limitant le mouvement du ou de chaque récepteur d'étiquette (31, 31a) le long du second trajet et un moyen extensible (79) reliant l'organe flexible (77) au support (71) pour permettre un mouvement du chariot le long du premier trajet après engagement du ou des récepteurs d'étiquette avec la ou les butées.

8. Applicateur d'étiquettes selon l'une quelconque des revendications précédentes caractérisé par un moyen d'ajustement (81) pour ajuster la longueur effective du ou de chaque élément flexible (77).

**Patentansprüche**

1. Etikettenanbringvorrichtung, die einen längs eines ersten Wegs (67) zwischen einer Etikettenausgabestation und einer Etikettenanbringstation hin und her bewegbaren Schlitten und zwei auf dem Schlitten angebrachte Etikettenaufnahmen (31, 31a) umfaßt, von denen zumindest eine erste Etikettenaufnahme (31) längs eines zweiten Wegs (49) bewegbar ist, um die Etikettenaufnahmen zu trennen, wenn sie Etiketten von der Ausgabestation zur Aufbringstation bringen, gekennzeichnet durch ein langgestrecktes flexibles Element (77), das zwischen der ersten Etikettenaufnahme (31) und einem festen Träger (71) verbunden ist, und eine Führung (83) für das flexible Element, die mit dem Schlitten bewegbar ist, so daß die erste Etikettenaufnahme längs des zweiten Wegs durch das flexible Element bewegt wird, wenn sich der Schlitten von dem festen Träger fort bewegt.

2. Etikettenanbringvorrichtung nach Anspruch 1, dadurch gekennzeichnet, daß die zweite Etikettenaufnahme (31a) auch mit einem festen Träger (71) durch ein langgestrecktes flexibles Element (77) verbunden ist, das sich um eine Führung (83) so erstreckt, daß die zweite Etikettenaufnahme längs des zweiten Wegs in der entgegengesetzten Richtung zur ersten Etikettenaufnahme (31) bewegt wird.

3. Etikettenanbringvorrichtung nach Anspruch 2, gekennzeichnet durch eine dritte Etikettenaufnahme (33), die auf dem Schlitten zwischen der ersten und der zweiten Etikettenaufnahme angebracht ist.

4. Etikettenanbringvorrichtung nach einem beliebigen der vorhergehenden Ansprüche, gekennzeichnet durch eine Rückzugfeder (61) zum Zurückbringen der ersten Etikettenaufnahme längs des zweiten Wegs, wenn der Schlitten zum festen Träger zurückbewegt wird.

5. Etikettenanbringvorrichtung nach Anspruch 2 oder 3, gekennzeichnet durch eine Rückzugfeder (61), die die erste und die zweite Etikettenaufnahme verbindet, die gespannt wird, wenn sie auseinander bewegt werden.

6. Etikettenanbringvorrichtung nach einem beliebigen der vorhergehenden Ansprüche, dadurch gekennzeichnet, daß die Führung eine auf dem Schlitten (43) drehbar angebrachte Walze (83) ist.

7. Etikettenanbringvorrichtung nach einem beliebigen der vorhergehenden Ansprüche, gekennzeichnet durch einen Anschlag (85), der die Bewegung des oder jeder Etikettenaufnahme (31, 31a) längs des zweiten Wegs begrenzt, und eine dehnbare Einrichtung (79), die das flexible Element (77) mit dem Träger (71) verbindet, um eine Bewegung des Schlittens längs des ersten Wegs nach Eingriff der Etikettenaufnahme(n) mit dem Anschlag (den Anschlägen) zu gestatten.

8. Etikettenanbringvorrichtung nach einem beliebigen der vorhergehenden Ansprüche, gekennzeichnet durch eine Einstelleinrichtung (81) zum Einstellen der effektiven Länge des oder jeden flexiblen Elements (77).

Fig. 1

Fig. 2

CONTROLS

Fig. 4

Fig. 3